# EUROPEAN PATENT SPECIFICATION

(11) **EP 2 596 967 B1**
(45) Date of publication and mention of the grant of the patent: **03.02.2016**
(21) Application number: 12187376.4
(22) Date of filing: 05.10.2012
(51) Int. Cl.: B60D 1/58

(54) **Hitch coupling device**
Kupplungskopplungsvorrichtung
Dispositif d'attelage

(30) Priority: 07.10.2011 GB 201117290
(43) Date of publication of application: 29.05.2013
(73) Proprietor: AGCO International GmbH, 8212 Neuhausen am Rheinfall (CH)
(72) Inventor: Kapfer, Johannes, 87616 Marktoberdorf (DE); Woelfle, Gottlieb, 87616 Marktoberdorf (DE)
(74) Representative: AGCO Intellectual Property Department

(56) References cited:
- EP-A1- 1 426 202
- EP-A1- 1 995 084
- US-A- 4 434 996
- US-A1- 2006 226 633

## Description

This invention relates to a coupling device for coupling a trailer, or an implement to a vehicle or agricultural machine. More specifically, the invention concerns a coupling device for use with a ball hitch.

Vehicles, especially agricultural tractors may be provided with a ball hitch so that a trailer or implement may be coupled to the hitch to be towed. A tow link comprises a rounded hollow coupling element which is placed on the ball hitch. The coupling element is typically held in place on the ball hitch by a bracket having a part which extends over the top of the coupling element and which can be screwed down to hold the coupling element in place on the hitch.

Legislation dictates that there must be a clearance of between 0.5mm and 1 mm between the coupling element and bracket to allow for movement of the coupling element relative to the ball hitch. This occurs when travelling over rough ground, or along a slope and the clearance prevents jamming of the coupling device with the bracket. If coupling elements, or ball hitches of different diameters are used it is necessary to reset the height of the bracket so that the correct clearance is maintained. It may even be necessary to reset the height of the bracket during use since coupling elements and ball hitches are worn down through use.

US2006/0226633 discloses the preamble of claim 1 and shows a pintle hitch adaptor comprising a sleeve upon which a post and hitch are placed. The post is provided with a pivotable arm which is used to secure a coupling element of the trailer to the hitch. The pivtoable arm is provided with a moveable latch which can co-operate with a cut out of the post to hold the arm in a locked position to keep the coupling element on the hitch.

It is an aim of the invention to provide an improved coupling device for coupling a coupling element of an implement or a trailer to a hitch of a vehicle or trailer and which allows for movement of the coupling element with respect to the hitch whilst still maintaining a secure coupling with the hitch.

According to the invention there is provided a coupling device as claimed in claim 1.

The coupling device permits a limited vertical displacement of the coupling element from the hitch whilst a part of the coupling device remains in contact with the coupling element. A part of the device moves with movement of the coupling element, thus, the coupling element is securely held in position at all times whilst jamming of the coupling element with the device is avoided.

Preferred features of the invention are claimed in the dependent claims.

The invention will now be described, by way of example only, with reference to the following drawings in which:
Figure 1 is a front perspective view of a first embodiment of a coupling device in accordance with the invention in which an arm is in a first position and a keeper in a first position,
Figure 2 is a side view of figure 1,
Figure 3 is a similar view as figure 2 but with some parts removed and the keeper in a second position,
Figure 3a is the same view as figure 3 with the keeper in a first position,
Figure 4 is cross sectional view of figure 1,
Figure 5 is rear perspective view of figure 1,
Figure 6 is a similar view as figure 2 but with the arm in a second position and the keeper in a third position and some parts removed,
Figure 7 is a cross sectional view of a second embodiment of a coupling device in accordance with the invention, and

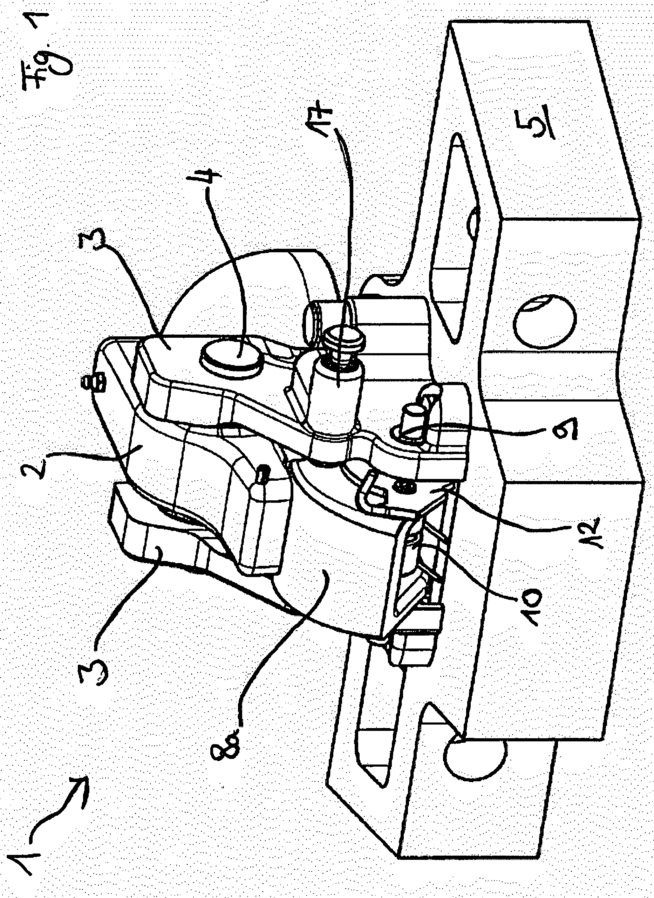

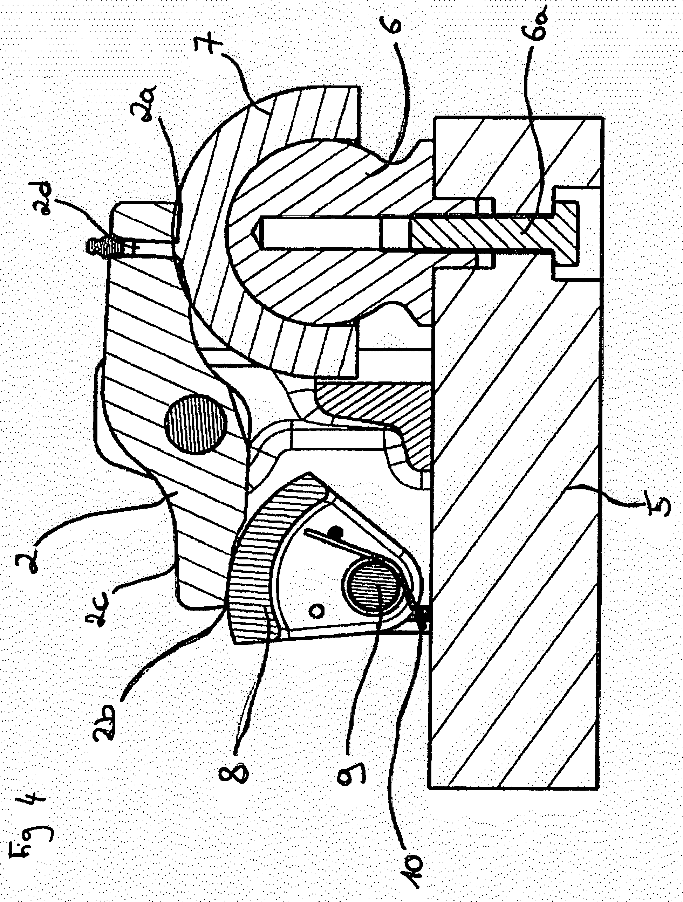

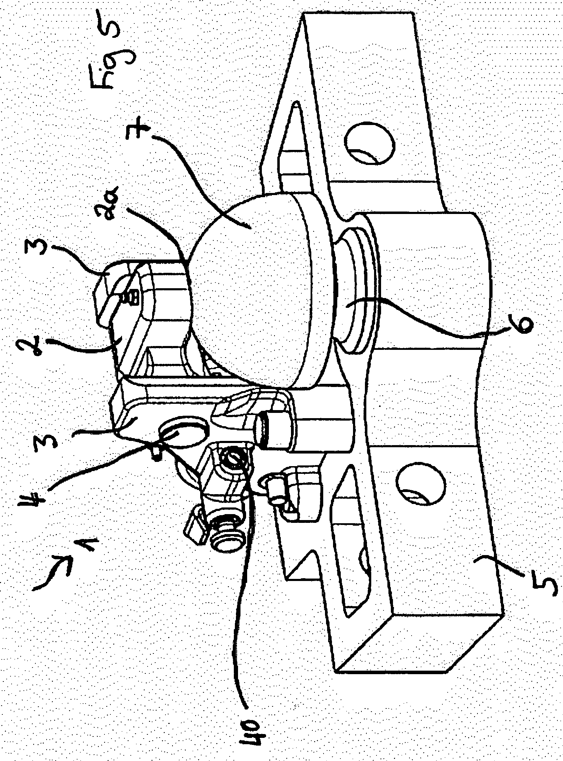

Figures 1 to 6 show a coupling device 1 in accordance with a first embodiment of the invention. Coupling device 1 comprises a pivotable arm 2 which is supported between two upright support members 3 by pivot pin 4. Support members 3, as well as other parts of the device are mounted on a solid block 5. In the example shown block 5 is also provided with a ball hitch 6. Ball hitch 6 is fixed to a securing pin 6a which is mounted on the block 5 (as seen in figure 4). Solid block 5 may be mounted to a vehicle such as a rear of a tractor to provide a hitch to which a coupling element of a trailer, or an implement to be towed is coupled.

Alternatively, instead of being mounted on the block 5, as shown in the drawings, ball hitch 6 may be mounted separately to a vehicle close to the mounting block 5.

The rear of the device here refers to the end of the device with or closest to the hitch which would be closest to the rear of the vehicle when mounted. The front of the device refers to the other end of the device which would be closest to the front of the vehicle when mounted.

Ball hitch 6 is covered by a ball hitch coupling element 7 which is a rounded hollow member which fits over the ball hitch 6. Coupling element 7 is connected to a coupling link (not shown) belonging to the towed implement or trailer. Towards the front of the block 5, there is an arm keeper 8. Arm 2 has at one end a coupling element contact surface 2a for contacting the coupling element 7. The contact surface 2a may comprise a plate of material suspended from a rod 2d which rests in a bore through the arm 2 (as shown in figure 4). Such a plate provides a better contact surface with the rounded surface of the coupling element 7. At the opposite end of the arm 2 there are two contact surfaces 2b and 2c on the underside and overside of the arm respectively which come into contact with the surface of arm keeper 8.

Arm keeper 8 is a pivoted wedge with an arcuate surface 8a. The arcuate surface may be a smooth surface, or it may be broken up into a series of flat surfaces with edges. The keeper 8 is pivoted about pivot pin 9. In figures 1, 2, 4 and 5 keeper 8 is in a first position and arm 2 is in a first position. Keeper 8 exerts an upward force on the contact surface 2b of arm 2 resulting in contact surface 2a to be pivoted downwards to come into contact with coupling element 7. Keeper 8 remains in this first position because pivot pin 9 is provided with a spring means 10 which is biased to rotate keeper 8 in a clockwise direction.

Each end of pivot pin 9 protrudes through support members 3 through elongated holes. Underneath each end of pivot pin 9 two springs 11 extend vertically from the pivot pin 9 onto block 5. Springs 11 have a larger spring constant than spring 10, because springs 11 are only compressed when an upward force is exerted on the arm by the coupling element when driving over uneven ground. The elongated holes in the support members 3 extend vertically, with respect to the plane of the surface of the block and are at least 1 mm in length allowing the pivot pin 9 and therefore keeper 8 to move at least 1 mm in a vertical direction. This movement allows arm 2 to move at least 1 mm and therefore coupling element 7 to move at least 1mm. If the vehicle and towed implement, or trailer drives over rough ground, or along a slope which moves the coupling element 7 upwards relative to the ball hitch 6 the force exerted upwards on the arm 2 at contact surface 2a by the coupling element 7 causes contact surface 2b to exert a downwards force on the keeper 8 and thus pivot pin 9. Pivot pin 9 exerts a downward force on springs 11 compressing them onto the block 5 and thus lowering keeper 8 and pivot pin 9 to preventing jamming of the coupling element with the arm 2. In this way springs 11 allow vertical movement of the coupling element. By vertical movement it is meant movement parallel or substantially parallel to the longitudinal axis Y of the ball hitch 6. The distance the springs 11 can move and therefore the distance the coupling element can move is limited by the length of the elongated holes. When the ground is flat, or less rough coupling element 7 moves back downwards on the ball hitch and less upwards force is exerted on contact surface 2a by the coupling element. This allows springs 11 to lengthen and return the arm 2 to its original position.

Between keeper 8 and one of the support members 3, there is provided a locking plate 12. Locking plate 12 is a thin plate having substantially the same shape as the side of view of keeper 8. It also pivots about pivot pin 9 by way of an elongated pivot hole 14. Keeper 8 has a protrusion 16 which fits into a further hole 15 in plate 12 thus connecting keeper 8 with plate 12. Protrusion 16 also provides a further pivot pin so that plate 12 can pivot with respect to keeper 8. Plate 12 is provided with a tab 13 to enable the user to move the plate and the keeper connected thereto. A locking means 17 is provided in the form of a locking bar which is moveable perpendicular to the plane of the support members 3. If the locking means 17 is activated (by pushing it towards keeper 8) it will block movement of keeper 8 and locking plate 12 because a protrusion 12a of locking plate 12 comes into contact with the locking means 17.

Locking means 17 may be provided with a spring 17a, which partly extends along locking means 17 and which is biased towards keeper 8. In this way, when no other forces are acting on locking means locking means 17 it is automatically pushed towards keeper 8 keeping keeper 8 (and plate 12) in a locked position.

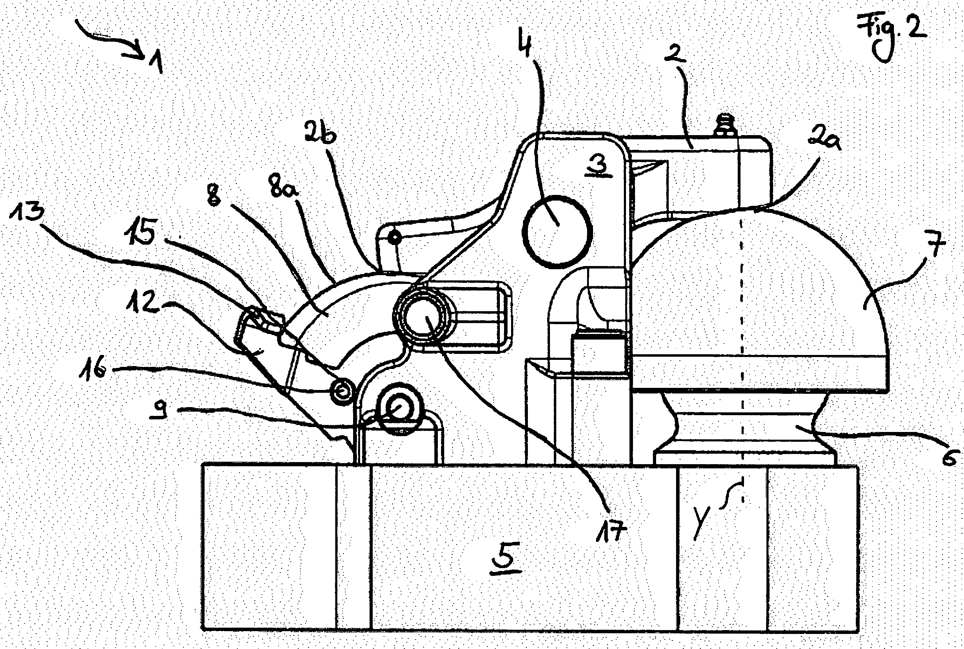

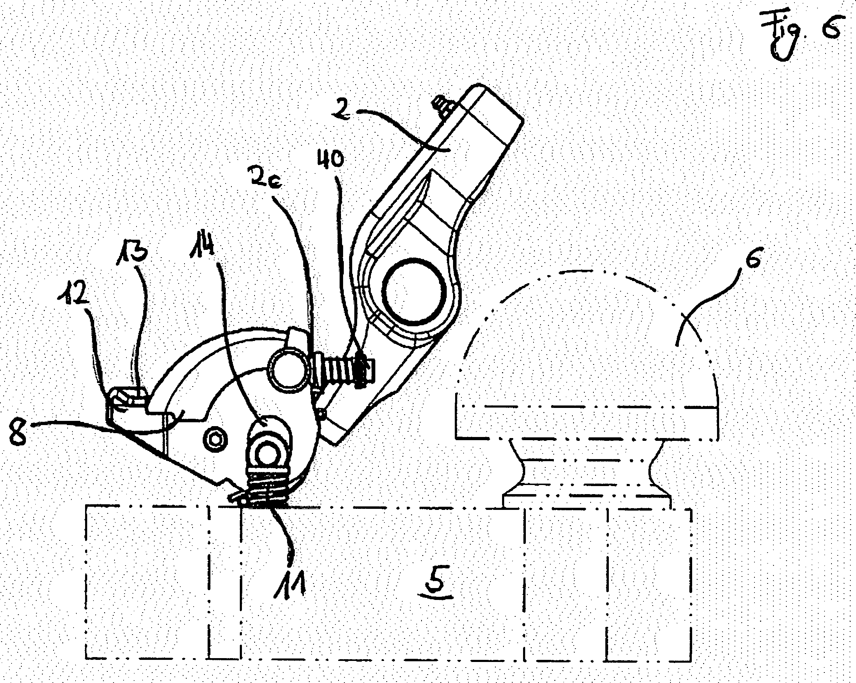

Use of the device will now be explained with reference to figures 2 and 6. In figure 6 arm 2 is held in a second position, a generally upright position, and keeper 8 is in a third position. A coupling element (not shown) may be placed on the ball hitch 6. In this upright position locking pin 17 is not engaged with keeper 8 and because keeper 8 is biased in a clockwise direction, keeper 8 in this position is exerting a force on contact surface 2c of arm 2 and keeping it in an upright position. To close the arm 2 a force (such as human force) is placed on the arm 2 to rotate the arm clockwise so that contact surface 2a is moved into contact with the coupling element 7 as shown in figure 2. The arm is now in a first position as shown in figures 1, 2, 4 and 5. The movement of arm 2 clockwise rotates keeper 8 (and plate 12) anti clockwise until contact surface 2b lies on the arcuate surface of keeper 8. Once contact surface 2b lies on the arcuate surface of keeper 8 spring 10 brings keeper 8 (and plate 12) automatically back to the first position as shown in figure 2. Thereby keeper 8 exerts an upwards force on the underside of arm 2 thus keeping contact surface 2a in contact with coupling element 7. When in this position, locking pin 17 can be pushed (or automatically moved if a spring 17a is provided) to come into contact with the keeper 8 thus preventing the plate 12 and the keeper 8 from moving. As such, the contact surface 2a is kept in a locked position with the coupling element 7. A bolt 40 which interacts with locking pin 17 at right angles shows whether locking means 17 is in a locked or unlocked position. If locking means 17 is activated, bolt 40 which is biased towards locking pin 17 engages with a recess in the locking pin 17 and bolt 40 does not protrude from the support member 3. If locking means 17 is unlocked, bolt 40 abuts with a non recessed part of bolt 40 and protrudes out of support member 3.

Alternatively, locking means 17 may comprise one or more pushers 50 in place of the spring 17a as shown in figure 8. By pulling locking means 17 outwards the two pushers 50 will move bolt 40 by overcoming the force exerted towards the pushers by spring 40a. If no force is acting on locking means 17, the locking means 17 is biased to move to the locked position. In figure 8, two pushers 50 are shown, however this locking arrangement would also function with just one pusher. The use of one or two pushers 50 means that a smaller force must be exerted on locking means 17 to move bolt 40 than that required with spring 17a. The use of two pushers 50 means that bolt 40 can move further outwards than by using of one pusher 50.

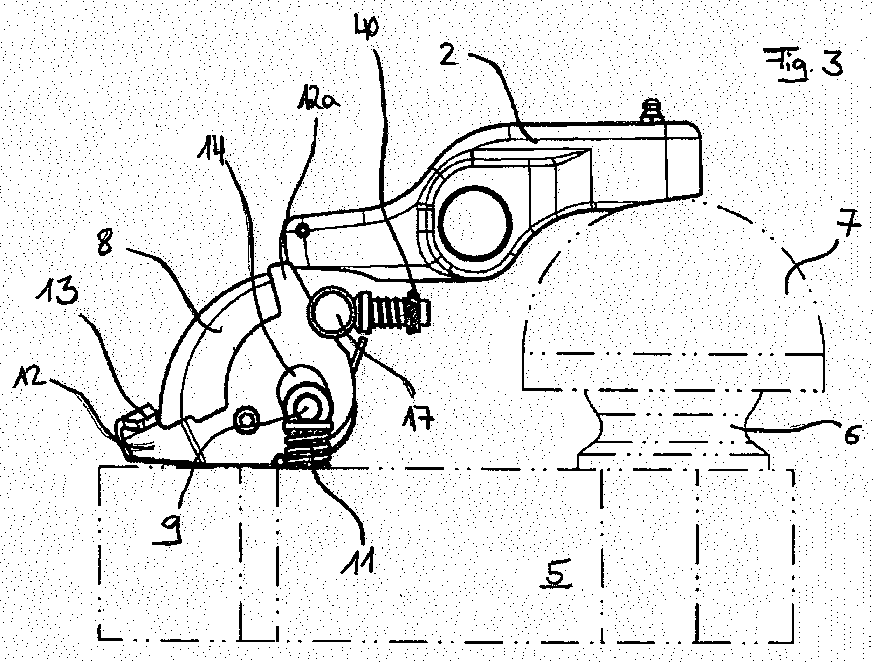

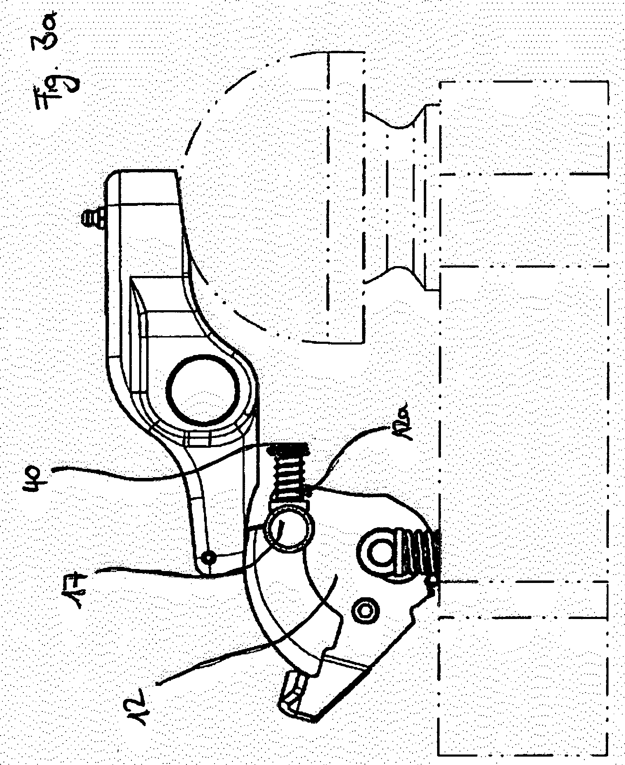

To remove or change the coupling element 7 from the hitch, locking pin 17 must first be pulled outwards away from keeper 8. Tab 13 on plate 12 is pulled to rotate plate 12 and keeper 8 anti-clockwise to a second position as shown in figure 3. In this position arm 2 can be rotated anticlockwise so that contact surface 2a comes away from the coupling element 7. If keeper 8 is then released it will rotated clockwise until it comes into contact with contact surface 2c of arm 2 as shown in figure 6. The coupling element can then be removed from the hitch.

Arm 2 and keeper 8 may be made from a hard wearing material such as one coated with steel.

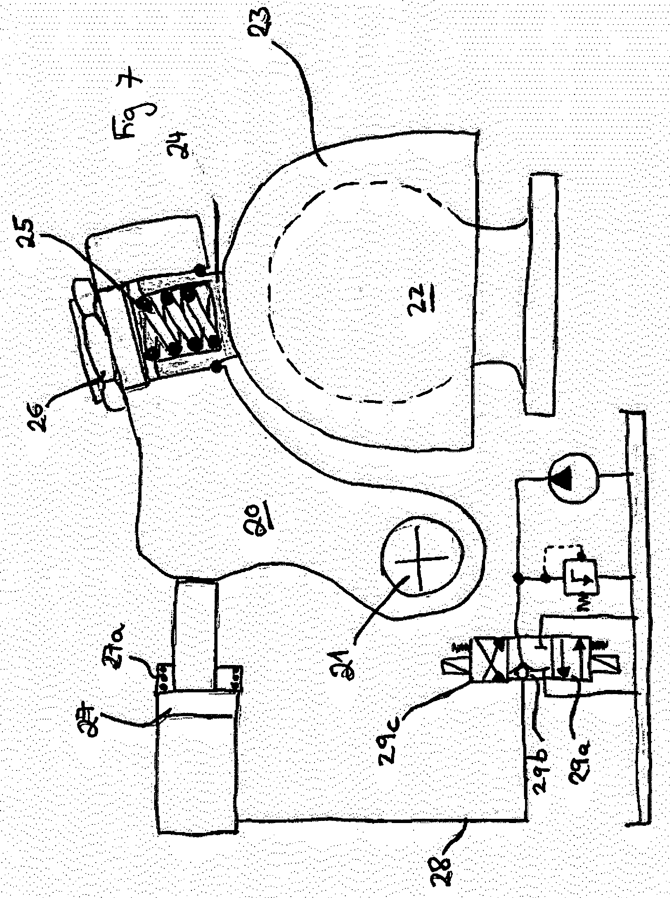

Figure 7 shows an alternative embodiment of a coupling device in accordance with the invention. In this embodiment an "L" shaped arm 20 is pivoted about pivot point 21. Ball hitch 22 is covered by a coupling element 23 which is connected to a coupling link of a vehicle or trailer to be towed (not shown). Arm 20 comprises a contact surface 24 which is attached to a spring means 25. Spring means 25 (is held in place within en bore in arm 20 by screw means 26. Arm 20 can be moved clockwise and into contact with coupling element 23 by applying a force. In this example, a piston 27 is used to apply a force to the arm 20. Movement of the piston is controlled by hydraulic circuit 28 and valve 29. Piston 27 is also an arm keeper in that it prevents arm 20 moving when in position. Spring means 25 has a spring constant which requires a force greater than the force exerted on it by the hydraulic pressure to compress it. Spring means 25 is only compressed when an upward force is exerted on the arm by the coupling element 23 when travelling over uneven ground.

To secure a coupling element 23 to the hitch 22, valve 29 is in position 29c and allows piston spring 27a to push hydraulic oil back to a reservoir and move piston 27 to a retracted position. Arm 20 can then be rotated anticlockwise and the coupling element 23 can be fitted onto the ball hitch 22. Arm 20 is then moved clockwise so that contact surface 24 comes into contact with coupling element 23 as shown in figure 7. By moving valve 29 to position 29a hydraulic oil can flow from a pump to piston 27 and overcomes the piston spring force 27a so that piston 27 is then extended so that it exerts a force on the arm 20 to keep contact surface 24 in contact with the coupling element 23. To hold piston 27 in the extended position it is necessary to move valve 29 to position 29b. Thereby the flow of hydraulic oil is blocked. When travelling over rough ground, or along a slope and coupling element 23 moves upwards, spring 25 is compressed and arm 20 is held in the same position. Spring means 25 will only compress so far so that coupling element 23 does not come into contact with arm 20. When coupling element 23 falls down, spring 25 extends remaining in contact with the coupling element 23.

Owing to the use of spring means 11 and 25 in both embodiments, the device of the present invention automatically adjusts itself to fit the coupling element fitted thus saving time and reducing operator risk in fitting the device with the correct clearance. Moreover, the device can be used with different sized coupling elements without having to re-adjust the device thus saving time and reducing risk if the operator forgets to re-adjust the device.

## Claims

1. A coupling device (1) for coupling a trailer or implement to a vehicle, said coupling device (1) comprising a pivotable arm (2) with a coupling element contact surface for contacting a coupling element (7) to be secured to a hitch and a keeper (8) for holding the contact surface in contact (2a) with the coupling element (7), said device provided with spring means (11) to allow vertical movement of the coupling element (7) with respect to the hitch whilst remaining in contact with the contact surface (2a) in a locked position, **characterised in that** the keeper 8 acts on an underside of the arm (2).

2. A coupling device as claimed in claim 1 wherein the spring means is connected to the keeper and a block upon which the device is mounted.

3. A coupling device 1 as claimed in any preceding wherein the keeper (8) comprises a rotatable arcuate surface (8a).

4. A coupling device as claimed in claim 3 wherein the rotatable arcuate surface (8a) is spring loaded about a pivot pin (9) and biased to rotate towards the hitch.

5. A coupling device 1 as claimed in claim 3 or claim 4 wherein the spring means (11) comprises two springs connected to each end of the pivot pin (9) and a block (5) upon which the device is mounted.

6. A coupling device 1 as claimed in any preceding claim wherein the device is provided with locking means (17) to hold the keeper (8) in position.

7. A coupling device 1 as claimed in claim 6 wherein the locking means (17) is biased to hold the keeper (8) in position.

8. A coupling device 1 as claimed in any preceding claim wherein movement of the spring means (11) is limited to a defined distance

9. A coupling device 1 as claimed in any preceding claim wherein the device comprises a ball hitch (6).

## Patentansprüche

1. Kopplungsvorrichtung (1) zum Koppeln eines Anhängers oder Arbeitsgeräts an ein Fahrzeug, wobei die Kopplungsvorrichtung (1) einen schwenkbaren Arm (2) mit einer Kontaktoberfläche für ein Kopplungselement zum Kontaktieren eines an einer Anhängerkupplung zu befestigenden Kopplungselements (7) und eine Sperreinrichtung (8) zum Beibehalten der Kontaktoberfläche in Kontakt (2a) mit dem Kopplungselement (7) aufweist, wobei die Vorrichtung mit einem Federmittel (11) zum Gestatten einer vertikalen Bewegung des Kopplungselements (7) relativ zu der Sperreinrichtung ausgestattet ist, während es in einer gesicherten Stellung in Kontakt mit der Kontaktoberfläche (2a) bleibt, **dadurch gekennzeichnet, dass** die Sperreinrichtung (8) auf eine Unterseite des Arms (2) einwirkt.

2. Kopplungsvorrichtung nach Anspruch 1, wobei das Federmittel mit der Sperreinrichtung und einem Block verbunden ist, auf dem die Vorrichtung montiert ist.

3. Kopplungsvorrichtung (1) nach einem der vorhergehenden Ansprüche, wobei die Sperreinrichtung (8) eine drehbare bogenförmige Oberfläche (8a) aufweist.

4. Kopplungsvorrichtung nach Anspruch 3, wobei die drehbare bogenförmige Oberfläche (8a) federbelastet um einen Schwenkzapfen (9) und so beaufschlagt ist, dass sie sich in Richtung der Anhängerkupplung dreht.

5. Kopplungsvorrichtung (1) nach Anspruch 3 oder 4, wobei das Federmittel (11) zwei Federn aufweist, die mit jedem Ende des Schwenkzapfens (9) und eines Blocks (5) verbunden sind, auf dem die Vorrichtung montiert ist.

6. Kopplungsvorrichtung (1) nach einem der vorhergehenden Ansprüche, wobei die Vorrichtung mit einem Verriegelungsmittel (17) zum Halten der Sperreinrichtung (8) in der Position ausgestattet ist.

7. Kopplungsvorrichtung (1) nach Anspruch 6, wobei das Verriegelungsmittel (17) beaufschlagt ist, um die Sperreinrichtung (8) in der Position zu halten.

8. Kopplungsvorrichtung (1) nach einem der vorhergehenden Ansprüche, wobei eine Bewegung des Federmittels (11) auf einen definierten Abstand begrenzt ist.

9. Kopplungsvorrichtung (1) nach einem der vorhergehenden Ansprüche, wobei die Vorrichtung eine Kugelkupplung (6) aufweist.

## Revendications

1. Dispositif de couplage (1) destiné à coupler une remorque ou un outillage à un véhicule, ledit dispositif de couplage (1) comprenant un bras pouvant pivoter (2) avec une surface de contact d'élément de couplage destinée à entrer en contact avec un élément de couplage (7) à fixer sur un attelage et un élément de maintien (8) destiné à maintenir la surface de contact (2a) en contact avec l'élément de couplage (7), ledit dispositif comportant des moyens élastiques (11) destinés à permettre un mouvement vertical de l'élément de couplage (7) par rapport à l'attelage, tout en restant en contact avec la surface de contact (2a) dans une position verrouillée, **caractérisé en ce que** l'élément de retenue (8) agit sur une face inférieure du bras (2).

2. Dispositif de couplage selon la revendication 1, dans lequel le moyen élastique est relié à l'élément de retenue et à un bloc sur lequel le dispositif est monté.

3. Dispositif de couplage (1) selon l'une quelconque des revendications précédentes, dans lequel l'élément de retenue (8) comprend une surface courbe pouvant tourner (8a).

4. Dispositif de couplage selon la revendication 3, dans lequel la surface courbe pouvant tourner (8a) est préchargée par ressort autour d'une broche de pivot (9) et préchargée de manière à tourner vers l'attelage.

5. Dispositif de couplage (1) selon la revendication 3 ou 4, dans lequel le moyen élastique (11) comprend deux ressorts reliés à chaque extrémité de la broche de pivot (9) et à un bloc (5) sur lequel le dispositif est monté.

6. Dispositif de couplage (1) selon l'une quelconque des revendications précédentes, dans lequel le dispositif comporte un moyen de verrouillage (17) pour maintenir l'élément de retenue (8) en position.

7. Dispositif de couplage (1) selon la revendication 6, dans lequel le moyen de verrouillage (17) est préchargé pour maintenir l'élément de retenue (8) en position.

8. Dispositif de couplage (1) selon l'une quelconque des revendications précédentes, dans lequel le déplacement du moyen élastique (11) est limité à une distance définie.

9. Dispositif de couplage (1) selon l'une quelconque des revendications précédentes, dans lequel le dispositif comprend un attelage à boule (6).
